# EUROPEAN PATENT APPLICATION

(11) **EP 4 803 684 A1**
(43) Date of publication of application: **09.09.2026**
(21) Application number: 25162356.7
(22) Date of filing: 07.03.2025
(51) Int. Cl.: D06C 7/04, B60R 13/08

(54) **A METHOD FOR SURFACE CHARRING OF A NATURAL TEXTILE**

(71) Applicant: Polestar Performance AB, 405 31 Gothenburg (SE)
(72) Inventor: REHNLUND MAIBACH, David, 422 49 Göteborg (SE)
(74) Representative: Zacco Sweden AB

(57) **Abstract**

The present disclosure relates to method (100) for surface charring of a natural textile to impart flame retardant properties to said natural textile, the method comprising the steps of providing (101) said natural textile and treating (103) said natural textile in an oxygen-free environment within a heat chamber of a pyrolysis apparatus, the heat chamber having a temperature of 100 to 320 degrees Celsius, for a time-period to achieve surface charring of said natural textile. The disclosure further relates to a method (200) for producing a vehicle interior material.

## Description

### TECHNICAL FIELD

The present disclosure relates to a method for surface charring of a natural textile to impart flame retardant properties to said natural textile. The present disclosure further relates to a method for producing a vehicle interior material. Moreover, the present disclosure relates to a pyrolysis apparatus adapted to perform surface charring of a natural textile.

### BACKGROUND

Textiles are usually produced in bulk, meaning that even small improvements in their treatment processes can have a significant environmental impact over time. Textiles used for particularly vehicle interiors need treatments to obtain flame retardant properties to provide passenger safety. These treatments often involve chemicals that release harmful emissions, including CO₂, contributing to pollution on a large scale. By processing textiles to impart flame retardant properties to the textile in a manner that is environmentally friendly, safety can be enhanced without adding to environmental harm. Avoiding CO₂ production in the treatment process would reduce the overall carbon footprint of textile treatment, making a substantial difference in the long term. Sustainable flame-retardant treatments ensure both human safety and environmental protection, creating a more responsible and future-friendly industry.

There are existing processes to produce textiles suitable for vehicle interiors in an environmentally friendly manner e.g. by lower-emission manufacturing techniques. However, these methods still generate some carbon emissions and rely on energy-intensive processes that could be further optimized.

Accordingly, even though methods in the present art for producing textiles with flame retardant properties work to some degree, methods for producing textiles with flame retardant properties of the present art can be further enhanced to improve their environmental sustainability.

Based on the aforementioned, there is a need for a method for imparting flame-retardant properties to a textile that is more environmentally friendly than methods of the present art.

### SUMMARY

It is therefore an object of the present disclosure to alleviate at least some of the mentioned drawbacks to provide a method which imparts/provides flame retardant properties to a natural textile. Further, the present disclosure provides a method for producing a vehicle interior material. Moreover, the present disclosure relates to a pyrolysis apparatus adapted to perform surface charring of a natural textile.

The present disclosure is at least partly based on the insight that by treating a natural textile in an oxygen free environment within a heat chamber having a temperature of 100 to 320 degrees Celsius the natural textile can be surface charred so to achieve flame retardant properties.

The present disclosure relates to a method for surface charring of a natural textile to impart flame retardant properties to said natural textile, the method comprising the steps of providing said natural textile and treating said natural textile in an oxygen-free environment within a heat chamber of a pyrolysis apparatus, the heat chamber having a temperature of 100 to 320 degrees Celsius. The treatment is performed for a time-period to achieve surface charring of said natural textile.

Advantageously, the method provides a sustainable end-product as no toxic and CO₂e heavy chemicals are used, or released in the process e.g. petrochemical solvents or halogens. Moreover, as no chemicals are needed, the method is more cost-efficient than methods of the present art. Furthermore, as there are not chemicals needed in the method, there is also no need to perform an additional treatment step to remove and handle flame retardant chemicals.

Accordingly, the method is sustainable, cost-efficient and process efficient.

The low temperature makes it possible to use residual heat from other industrial processes to execute the method, such as aluminum smelting plants. The method may be executed completely by electricity, preferably renewable electricity. The temperature range of 100 to 320 degrees C° results in that the cellulose will undergo (slow) thermal decomposition to carbonize. Temperature ranges outside of 100-320 degrees Celsius may lead to insufficient or no charring.

The natural textile may, after the treatment, maintain/have a raw/pristine core (i.e. not thermally degraded). Thereby, maintaining base material flexibility.

In some aspects, the temperature of the heat chamber is 240 to 300 degrees Celsius. The specific range of 240-300 degrees Celsius is preferable as it may optimally enable the surface of the textile to be thermally degraded and charred while maintaining performance (e.g. flexibility/robustness) of the textile core and efficiency of the charring process (i.e. without lengthening the process significantly).

The step of providing/treating may be void of chemical additives. In other words, the treatment (within the heat chamber) may be chemical-free. Advantageously, by actively performing the treatment without any chemical additives, the process is environmentally friendly. Moreover, any potential step of pre-treating the natural textile may also be void of an addition/treatment/affection of chemical additives to the natural textile.

Chemical additives may be any chemical additives as appreciated by a skilled person in the art. For example, flame retardant additives. Flame retardant additives may for example be phosphorus-based compounds. Moreover, chemical additives may also refer to solutions comprising e.g. sodium chloride.

The time-period may be 1 second to 20 minutes, preferably 3-13 minutes. Accordingly, such a time-period combined with the temperature ensures optimal surface charring of the natural textile to impart flame retardant properties to the textile in a manner which can be performed in bulk-production with minimized defects.

The method may comprise the step of outputting/removing the textile, after the step of treating.

The natural textile may be a non-fossil textile, preferably cellulose-based. Accordingly, non-fossil textiles may be textiles which are biodegradable and which stem from plants and/or animals.

In some aspects, the natural textile may be a yarn comprising at least two twinned filaments, preferably at least six twinned filaments, or, the textile is a fabric composed of at least one yarn, each yarn comprising at least two twinned filaments, preferably at least six twinned filaments. In other aspects, the filaments are not twinned.

Accordingly, the natural textile may be treated, as a yarn comprising/consisting of twinned filaments. Alternatively, or additionally, the natural textile may be treated as a fabric made from said yarn which is interconnected to form a fabric. The yarn may be interconnected by e.g. weaving, knitting or bonding.

The fabric may be a two-dimensional fabric. Two-dimensional fabric may refer to a fabric/textile structure comprising interlaced yarns arranged in a flat and/or planar form. The form may be any suitable form such as circular. The form may also be rectangular or have any other polygonal form. The fabric may have a single layer of interlaced yarn or multiple layers of interlaced yarn. The fabric may have a thickness of 0.5-5 mm, preferably 0.7-2 mm.

If the fabric is a two-dimensional fabric, the step of treating may be performed for one surface of said fabric. The surface may be the surface which is to be associated with or facing towards an ambient environment or vehicle car interior (i.e. having the highest risk of being exposed to a fire or heat).

Each filament of the natural textile may comprise a thickness of at least 1 decitex, preferably, at least 3 decitex, more preferably at least 6 decitex. The thickness of each filament may be beneficial as it allows the filament to, when treated in accordance with the method herein, be surface charred in a manner that ensures an efficient process without affecting a core of the filament. Preferably, if the textile is a yarn, it may comprise a thickness of 100-200 decitex, preferably 150-180 decitex (defined by accumulated thicknesses of at least two filaments).

In some aspects, prior to the step of treating the method comprises the step of:
- feeding said natural textile into said oxygen-free environment, wherein feeding is performed in batches or continuously.

The batch feeding may be performed by a rack system, a shelf system or any other suitable system.

The continuous feeding may be performed by a conveyor belt system, a continuous loop system or any other suitable system. Advantageously, allowing for high efficiency with low labour need.

The method may further comprise the steps of obtaining sensor data indicative of a characteristic of said natural textile or attribute of said oxygen-free environment during the step of treating. Characteristic of said textile or attributes of said oxygen-free environment may be at least one of gas emissions, carbon monoxide/carbon dioxide levels (which are caused by the material's full or partial oxidation), colour change (to signal when sufficient surface charring is achieved, as indicated by that a target colour is reached by the exterior surface of the natural textile).

There may be a variety of suitable techniques for measuring, using dedicated sensor devices, preferably involving light-based sensor devices (infrared or laser based). A preferred way of recording/obtaining the sensor data may be by using spectrometry. To monitor the environment within the chamber, Fourier transform infrared spectrometry sensors may be utilized.

The attributes/characteristics may further be volume expansion of the textile. Accordingly, a tensile strain of the textile may be measured during the treatment to monitor change in volume (e.g. shrinking due to excessive pyrolysis treatment). Consequently, increased tensile strain may be detected and used to signal that the treatment should be stopped or that the material needs quality control.

The attributes/characteristics may further be weight of the textile.

Conclusively, the monitoring may be at least one of gas emission monitoring, textile volume expansion monitoring, textile weight monitoring and textile colour change monitoring.

Moreover, the method may comprise the step of monitoring the natural textile based on said sensor data. Further, the method may comprise the step of, in response to that at least one of said monitored characteristic and said monitored attribute exceeds a threshold or reaches a desired level, performing an adjustment action to said natural textile to achieve and/or ensure a desired condition for said natural textile and/or to prevent an undesirable/defect condition for said natural textile.

Accordingly, the performed action may be at least one of removal of said textile from said heat chamber, adaptation of the temperature of the heat chamber and flagging the natural textile. The flagging may be indicative of that the textile need manual inspection, that the textile need rework to meet standards or that the textile needs further testing (e.g. durability testing). The flagging may be a digital flag, a manual flag or any other suitable flag that indicates that the textile, or parts thereof are in need of further control/work.

Advantageously, the method is operable to ensure that the textile is compliant with quality requirements.

The present disclosure further relates to a method for producing a vehicle interior material comprising steps of providing a natural textile, treating said natural textile in an oxygen-free environment within a heat chamber of a pyrolysis apparatus, the heat chamber having a temperature of 100 to 320 degrees Celsius for a time-period to achieve surface charring of said natural textile. Further, the method comprises removing said natural textile after achieving said surface charring and adapting the natural textile to obtain a vehicle interior material. The method may be varied in accordance with any aspect of any method herein.

The present disclosure further relates to a pyrolysis apparatus adapted to perform surface charring of a natural textile, the apparatus comprising a heat chamber. The pyrolysis apparatus being configured to perform the method according to any aspect herein. The pyrolysis apparatus may be operable to perform in a controlled atmosphere, preferably a controlled oxygen-free atmosphere.

The present disclosure further relates to a vehicle comprising a vehicle interior material obtained by performing the method of any aspect herein.

### BRIEF DESCRIPTION OF THE DRAWINGS

These and other features and advantages of the present disclosure will now be further clarified and described in more detail, with reference to the appended drawings;
- Figure 1: illustrates a method in the form of a flowchart in accordance with some aspects of the present disclosure;
- Figure 2: illustrates a decision flowchart in accordance with some aspects of the present disclosure;
- Figure 3: illustrates four types of textiles in accordance with some aspects of the present disclosure;
- Figure 4: illustrates a pyrolysis apparatus from a front view schematically in accordance with some aspects of the present disclosure;
- Figures 5A-5B: illustrates a pyrolysis apparatus outputting a treated textile in accordance with some aspects of the present disclosure;
- Figure 6: illustrates a method in the form of a flowchart in accordance with some aspects of the present disclosure; and;
- Figure 7: illustrates the interior of a vehicle in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for the purpose of describing particular aspects only and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a structure" or "the structure" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and Band C, A and B, Band C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "surface charring" as used herein may refer to that the natural textile is treated to only be charred at a surface/outer layer. The complete outer layer may be surface charred. Hence, after treatment, the natural textile may maintain a pristine/raw core/non-thermally degraded core. Surface charring may refer to a material having been charred completely on a surface/outer layer thereof, and wherein said charring extends, as viewed from a cross-section of said natural textile, by a decreasing gradient of charring from the surface/outer layer thereof towards its core. Accordingly, surface charring may refer to non-complete charring. In other words, surface charring may refer to partial lateral charring of the cross-section of the natural textile.

The term "yarn" within the present disclosure may refer to a single yarn, preferably in the form of a strand, comprising two or more filaments. In some aspects, the yarn may be made of staple fibers. The yarn may be a multifilament yarn, a core yarn, a plied yarn, a staple (spun) yarn, a fiber yarn, or any other suitable type of yarn. The filaments may be twinned/plied/interlaced. In some aspects, yarn may refer to a multi-filament comprising a plurality of untwisted interconnected filaments. In other words, the term "yarn" may refer to a continuous strand having one or more filaments, or a plurality of fibers along its length.

Accordingly, the term "surface charring" may be in view of the continuous strand that defines the yarn.

The term "fiber" may refer to units of matter having length at least 100 times their diameter or width.

The term "natural" in relation to textile (i.e. fibres/filaments) within the present disclosure may refer to cotton, wool, jute, flax and silk or other suitable purely natural fibers/filaments. Additionally, natural textile within the context herein may refer to synthetic fibers/filaments made from materials already existing in nature (e.g. regenerated cellulose). In other words, synthetic fibers derived from naturally occurring materials (viscose, lyocell, modal, rayon) i.e. textile made from natural raw materials.

The term "fabric" may refer to a material/fabric created from weaving, knitting, or bonding yarn(s) together to form a cohesive material. The textile may be in the form of a sheet. The textile may be a 2-dimensional textile having a thickness of up to 10 mm, preferably up to 5mm. In some aspects, 2-dimensional textile may refer to a textile having a thickness of 0.05-5 mm, preferably 0.05-2 mm.

The term "textile" as used herein may therefore cover both fabrics and yarns.

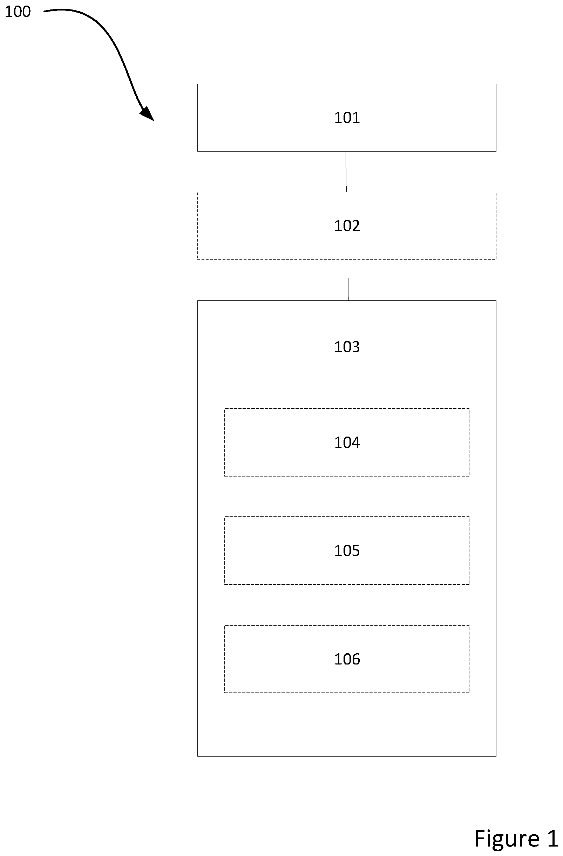

Figure 1 illustrates a flowchart of a method 100 for surface charring of a natural textile to impart flame retardant properties to said natural textile, the method 100 comprising the steps of providing 101 said natural textile and treating 103 said natural textile in an oxygen-free environment within a heat chamber of a pyrolysis apparatus, the heat chamber having a temperature of 100 to 320 degrees Celsius. The treatment is performed for a time-period to achieve surface charring of said natural textile.

The temperature of the heat chamber may be 100-300 degrees Celsius, preferably 240 to 300 degrees Celsius. The time-period may be 1 second to 20 minutes, preferably 3-13 minutes. Further, the natural textile may be a non-fossil textile, preferably cellulose-based. In some aspects, the textile is cellulose.

Figure 1 further illustrates that the method 100 may comprise the step of feeding 102 said natural textile into said oxygen-free environment, wherein feeding is performed in batches or continuously. Accordingly, to treat the textile, the textile may first be fed to the heat chamber of an apparatus to be exposed to said oxygen-free environment.

Figure 1 further illustrates that the method 100 may further comprise the steps of obtaining 104 sensor data indicative of a characteristic of said natural textile or attribute of said oxygen-free environment during the step of treating. Further, the method 100 may comprise the step of monitoring 105 the natural textile based on said sensor data. Furthermore, the method comprises the step of, in response to that at least one of said characteristic and said attribute exceeds a threshold or reaches a desired level, performing 106 an adjustment action to said natural textile to ensure a desired condition for said natural textile. In other words, the adjustment action may be performed to ensure that the natural textile maintains or obtains a desired condition.

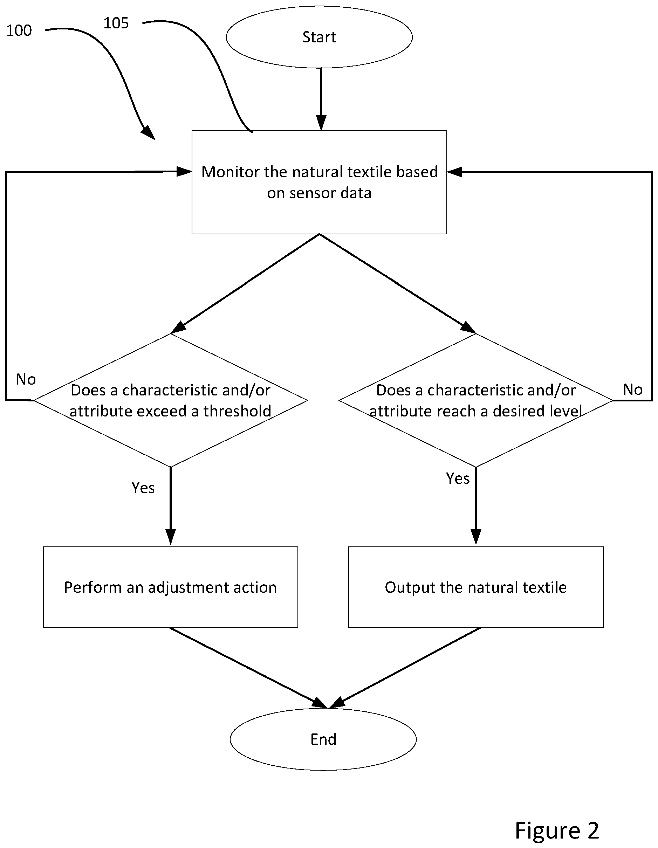

Figure 2 illustrates a flowchart of some aspects of the method 100 according to some aspects herein. The flowchart depicts the steps of monitoring 105 the natural textile based on sensor data until an adjustment action is performed. Accordingly, the flowchart depicts two situations.

In one situation, a characteristic of the natural textile (e.g. weight, size or other characteristic) has exceeded a threshold (which may be pre-determined), or an attribute of said environment has exceeded a threshold. Then, the flowchart depicts that an adjustment action is performed or should be performed. In another situation, a characteristic of the textile (e.g. weight, size or other characteristic) has reached a desired level (which may be pre-determined), or an attribute of said environment has reached a desired level. Then, the flowchart depicts that the natural textile is outputted or should be outputted as the pyrolysis treatment is finished.

As mentioned herein, the method 100 may operate to let the textile be in said chamber for pyrolysis treatment for a time-period which is 1 second to 20 minutes, preferably 3-13 minutes. Nonetheless, the monitoring may override the time period if the desired level is reached or if said threshold is exceeded. For example, if the time-period is 10 minutes and it is determined after 7 minutes that a characteristic of the textile has reached a desired level, the textile may be outputted from the pyrolysis apparatus performing the method 100. The method may (via e.g. control circuitry) instruct/transmit a control signal to feed out/output the textile from the apparatus. Thus, another example situation is if the time-period is 10 minutes and it is determined after 10 minutes that a characteristic of the textile has not reached a desired level, the time-period may be prolonged to be longer than 10 minutes.

In other aspects, the time-period may work in synergy with the monitoring. For example, the time-period may be 10 minutes. Then, after 10 minutes, the step of monitoring may be performed to determine whether characteristics/attributes exceeded a threshold or have reached desired levels as a safety measure for deciding whether further quality inspection is needed. Hence, in such an aspect, the textile may be outputted from the apparatus irrespective of whether the textile is in its desired condition or not.

Subsequent to removal, the textile may be washed and/or brushed to remove loose carbon particles from the surface. Accordingly, an aftertreatment step may be performed subsequent to removing/treating the textile. By incorporating brushing in an aftertreatment step, a color of the textile may be affected to so brush out a specific color, eliminating the need for an additional dyeing step. Hence, after removing the textile, an aftertreatment step may be performed to brush the textile to obtain a desired colour of the textile. The desired colour may be indicated prior to brushing (e.g. by a digital/physical stamp on the textile) or the desired colour may be pre-determined.

The monitoring may be performed continuously and dynamically, or at regular intervals.

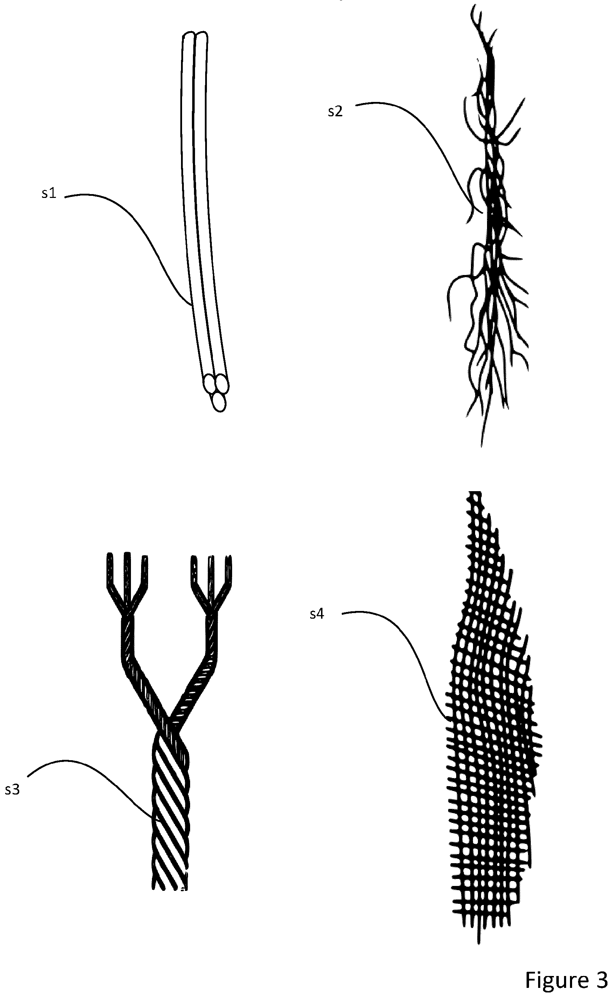

Figure 3 illustrates a front view of four different types of natural textiles which may be utilized in the method 100 of any aspect herein i.e. four types, each of which may be fed into a pyrolysis apparatus to be surface charred. Figure 3 illustrates a (strand of) multifilament yarn s1, a strand of yarn comprising fibers s2 and a (strand of) yarn comprising at least two twinned filaments s3. Further, Figure 3 illustrates that the natural textile may be a sheet of fabric s4. In other words, a two-dimensional fabric. Hence, the natural textile may comprise any suitable constitution of a plurality of filaments/fiber or be a piece of fabric composed of interlaced yarn.

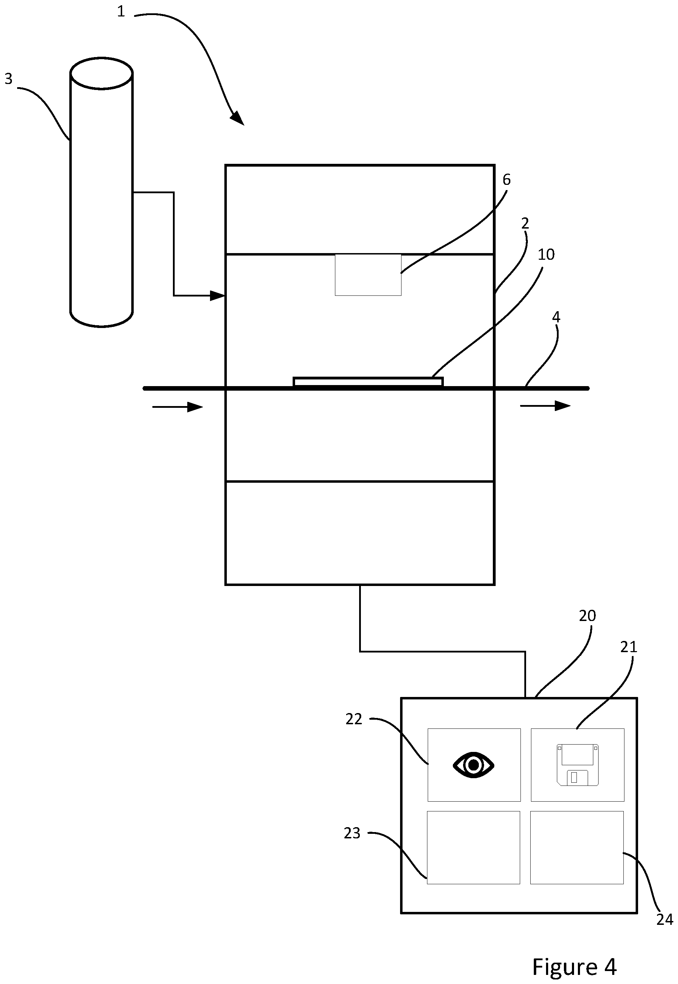

Figure 4 illustrates a pyrolysis apparatus 1 adapted to perform surface charring of a natural textile. The pyrolysis apparatus comprising a transport rack/track 4 for continuous (e.g. in an open furnace mode) or batchwise (e.g. in a closed-furnace mode) transport of the natural textile 10. Figure 4 illustrates that the rack 4 transports a textile 10 along a first direction. It should be noted that in some aspects, the pyrolysis apparatus 1 may alternatively or additionally comprise shelves or the like for holding said natural textile 10. In Figure 4 the natural textile 10 is a piece of fabric. Nonetheless, the natural textile 10 may be a yarn having e.g. interlaced filaments or fibers. The pyrolysis apparatus 1 further comprises a heat chamber 2. Moreover, Figure 4 illustrates that the pyrolysis apparatus 1 may comprise an environment control unit 3 for e.g. providing an inert gas environment or vacuum in said heat chamber 2 so to attain and maintain an oxygen-free gas environment. Hence, the environment control unit 3 may be a cylinder for e.g. filling the chamber 2 with an inert gas (e.g. N₂) or a vacuum pump.

Further, Figure 4 illustrates that the pyrolysis apparatus 1 may comprise a sensor device 6 for monitoring the environment (e.g. gas development) and/or for monitoring the textile in said environment.

Furthermore, Figure 4 illustrates that the apparatus 1 may comprise, or be coupled to control circuitry 20 which is operable to control the pyrolysis apparatus 1 so that the pyrolysis apparatus 1 performs surface charring on any textile which is fed into said pyrolysis apparatus 1. Accordingly, the control circuitry 20 may be operable to control the apparatus 1 for the apparatus to perform the method step of treating. The control circuitry 20 may comprise a memory device 21. Further, the control circuitry 20 may comprise, for example, one or more central processing units (CPUs), graphics processing units (GPUs) dedicated to performing calculations, and/or other processing devices. The control circuitry 20 may also comprise an input/output interface 23 for e.g. receiving data from sensor devices and output control signals. Control signals may be signals to feed textile relative the heat chamber 2 (e.g. feed in or feed out textile), control signals may also be signals to adjust temperature in the heat chamber. In some aspects, the control circuitry 20 is operable to dynamically control temperature, speed of transport rack 4 based on data received in the control circuitry 20 from the sensor device 6 so to be able to optimize the textile subject to surface charring. The memory device 21 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 21-24. Each memory device 21 may store any suitable instructions, data or information, including a computer program, software, an application including one or more of logic, rules, code, tables, etc. and/or other instructions capable of being executed by e.g. control circuitry 20 and, utilized.

As illustrated in Figure 4, the control circuitry 20 may also comprise a monitoring module 22 for monitoring textile and environment of the heat chamber 2. The monitoring module 22 may monitor based on data from the sensor device 6. The control circuitry 20 may further comprise an adjustment module 24 operable to transmit signals to users/auxiliary systems, or the pyrolysis apparatus to perform adjustment actions. In some embodiments, the memory device 21 may be considered to be integrated in the control circuitry 20. It should be noted that the heat chamber 2 is adapted to be free from chemical additives during treating of the textile. In some aspects, the control circuitry 20 may, by said monitoring module 22, monitor development and/or addition of any environmentally hazardous chemical additives, and issue a warning signal (to e.g. an operator or an auxiliary system) if any environmentally hazardous chemical additives are detected.

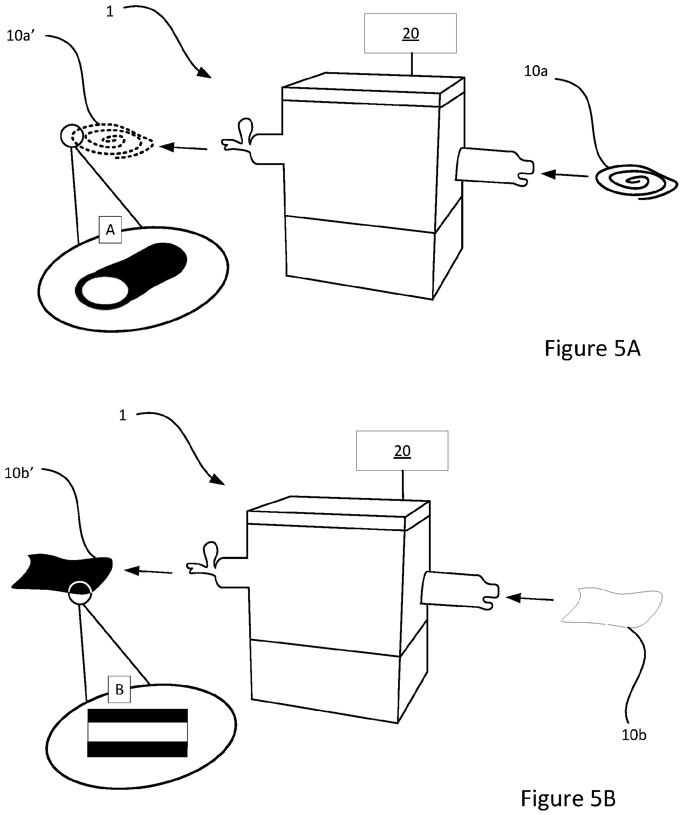

Figures 5A-5B illustrates an objective view of the pyrolysis apparatus 1 in operation while performing surface charring to two different type of textile 10a, 10b as input to the apparatus 1.

Figure 5A illustrates a yarn 10a that is inputted to the apparatus 1. Further, Figure 5A illustrates the outputted yarn 10a' i.e. after treatment in the apparatus. Figure 5A illustrates a cross-section A of the yarn which depicts that the yarn is surface charred so that the core of the yarn is pristine/not thermally degraded/raw. The yarn of Figure 5A may be a multifilament yarn, a core yarn with a sheath, a plied yarn formed as a stand or any other suitable type of yarn having at least two filaments or a plurality of staple fibers. In any aspect, the finished yarn after treatment is charred at the surface such that an outer (circumferential) layer thereof has undergone thermal degradation to form a (blackened) carbonized layer that provides flame retardant properties. The treated yarn 10' may subsequently be interlaced/adapted to form a fabric suitable for use in a vehicle as a vehicle interior material.

Figure 5B illustrates a textile in the form of a piece of fabric 10b inputted to the apparatus and further, after treatment, outputted as a treated piece of fabric 10b'. Figure 5B further illustrates a cross-section B of the treated piece of fabric 10b' which depicts that the piece of fabric 10b' is surface charred on outer layers. However, it should be noted that in some aspects, the apparatus 1 may be operable to perform surface charring to only one outer layer of the piece of fabric 10b'. Accordingly, the piece of treated fabric 10b' may comprise an outer top layer and an opposite outer bottom layer in which the apparatus 1 is operable to treat the fabric such that only one of the outer layers are surface charred. This may be preferably in some situations where e.g. the fabric is intended for use as a vehicle interior material (for example for the seating or other areas in the vehicle) and it may be desirable to only treat a surface which will be directed towards the ambient environment (i.e. having highest risk of being under fire). The control circuitry 20 of the apparatus 1 may control the heat chamber (e.g. by providing multiple heat zones) and/or the transport track to enable only one of the surfaces to be treated. Alternatively, one of the surfaces may be pre-treated/adapted so to not be thermally degraded in said pyrolysis apparatus 1.

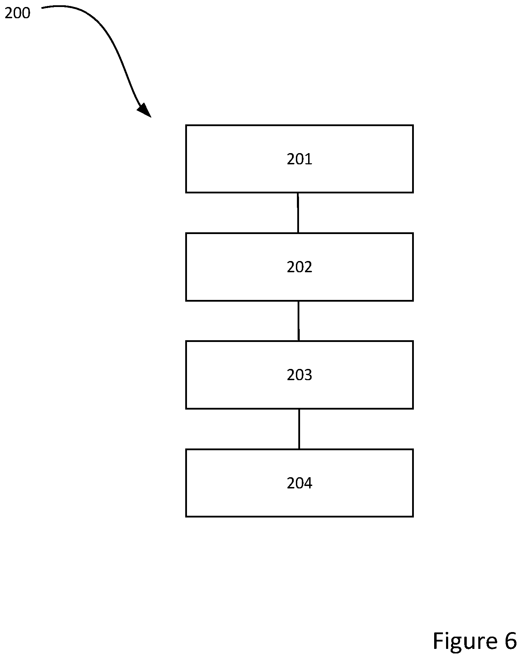

Figure 6 illustrates a method 200 in the form of a flowchart. Specifically, Figure 6 illustrates a method 200 for producing a vehicle interior material comprising providing 201 a natural textile. Further, the method 200 comprises the step of treating 202 said natural textile in an oxygen-free environment within a heat chamber of a pyrolysis apparatus, the heat chamber having a temperature of 100 to 320 degrees Celsius for a time-period to achieve surface charring of said natural textile. Further, the method 200 comprises the steps of removing 203 said natural textile (from the heat chamber of the apparatus) after achieving said surface charring and adapting 204 the natural textile to obtain a vehicle interior material. The adapting 204 step may comprise brushing or washing the textile or providing any other treatment to the textile (e.g. coating).

The textile may be used as a vehicle interior material e.g. for seats, headliner, carpet, floor mats, door panels, sun visor etc.

The method 200 may be performed in accordance with any aspects herein, i.e. by the pyrolysis apparatus 1 illustrated in e.g. Figures 4-5B.

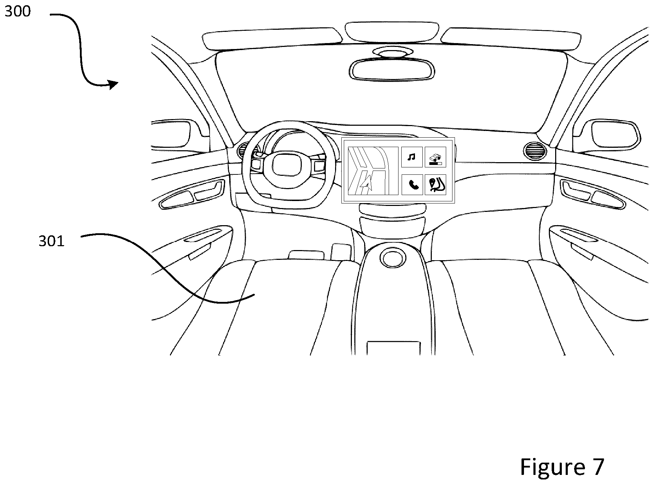

Figure 7 illustrates a part of a vehicle 300 seen from the inside. Accordingly, a part of a vehicle interior is illustrated in Figure 7. Figure 7 illustrates that the vehicle 300 comprises a vehicle interior material produced by the method 100, 200 of any aspect herein. Accordingly, the vehicle interior material 301 may comprise a natural textile being surface charred by the method 100, 200 of any aspect herein.

## Claims

1. A method (100) for surface charring of a natural textile to impart flame retardant properties to said natural textile, the method comprising the steps of:
- providing (101) said natural textile;
- treating (103) said natural textile in an oxygen-free environment within a heat chamber of a pyrolysis apparatus, the heat chamber having a temperature of 100 to 320 degrees Celsius, for a time-period to achieve surface charring of said natural textile.

2. The method (100) according to claim 1, wherein the temperature of the heat chamber is 100-300 degrees Celsius, preferably 240 to 300 degrees Celsius.

3. The method (100) according to claim 1 or 2, wherein the method step of treating is void of chemical additives.

4. The method (100) according to any one of the preceding claims, wherein the time-period is 1 second to 20 minutes, preferably 3-13 minutes.

5. The method (100) according to any one of the preceding claims,
wherein the textile is a yarn comprising at least two filaments, preferably at least six filaments, or,
the textile is a fabric composed of at least one yarn, each yarn comprising at least two filaments, preferably at least six filaments, preferably the filaments are twinned.

6. The method (100) according to claim 5, wherein the textile is a two-dimensional fabric, wherein the step of treating is performed for one surface of said fabric.

7. The method (100) according to any one of the preceding claims, wherein each filament of the natural textile comprises a thickness of at least 1 decitex, preferably, at least 3 decitex, more preferably at least 6 decitex.

8. The method (100) according to any one of the preceding claims, wherein the natural textile is a non-fossil textile, preferably cellulose-based.

9. The method (100) according to any one of the preceding claims, wherein prior to the step of treating the method (100) comprises the step of:
- feeding (102) said natural textile into said oxygen-free environment, wherein feeding is performed in batches or continuously.

10. The method (100) according to any one of the preceding claims, wherein the method (100) further comprises the steps of:
- obtaining (104) sensor data indicative of a characteristic of said natural textile or attribute of said oxygen-free environment during the step of treating;
- monitoring (105) the natural textile based on said sensor data;
wherein the method (100) comprises the step of, in response to that at least one of said characteristic and said attribute exceeds a threshold or reaches a desired level;
- performing (106) an adjustment action to said natural textile to ensure a desired condition for said natural textile.

11. The method (100) according to claim 10, wherein the performed action is at least one of removal of said textile from said heat chamber, adaptation of the temperature of the heat chamber, or flagging of said textile.

12. The method (100) according to claim 10 or 11, wherein the monitoring is at least one of gas emission monitoring, textile volume expansion monitoring, textile weight monitoring and textile colour change monitoring.

13. A method (200) for producing a vehicle interior material comprising:
- providing (201) a natural textile;
- treating (202) said natural textile in an oxygen-free environment within a heat chamber of a pyrolysis apparatus, the heat chamber having a temperature of 100 to 320 degrees Celsius for a time-period to achieve surface charring of said natural textile
- removing (203) said natural textile after achieving said surface charring
- adapting (204) the natural textile to obtain a vehicle interior material.

14. A pyrolysis apparatus (1) adapted to perform surface charring of a natural textile, the apparatus comprising:
- a heat chamber (2)
wherein the pyrolysis apparatus (1) is configured to perform the method (100, 200) according to any one of the preceding claims.

15. A vehicle (300) comprising a vehicle interior material (301) obtained by performing the method (100, 200) of any one of the claims 1-13.
